# FASCICULE DE BREVET EUROPEEN

(11) **EP 2 598 721 B1**
(45) Date de publication et mention de la délivrance du brevet: **23.04.2014**
(21) Numéro de dépôt: 11754709.1
(22) Date de dépôt: 20.07.2011
(51) Int. Cl.: F01D 11/00, F01D 5/22

(54) **Roue de turbine ou de compresseur de turbomachine**
Turbinen- oder Verdichterrad einer Strömungsmaschine
Turbine or compressor wheel of a turbomachine

(30) Priorité: 27.07.2010 FR 1056153
(43) Date de publication de la demande: 05.06.2013
(73) Titulaire: Snecma, 75015 Paris (FR)
(72) Inventeur: ALQUIER, Damien, F-77550 Moissy-cramayel Cedex (FR); BOURY, Jacques, Auguste, Amédée, F-77550 Moissy-cramayel Cedex (FR); COURTIN, Pascal, F-77550 Moissy-cramayel Cedex (FR); TRAN, Huu-Thanh, F-77550 Moissy-cramayel Cedex (FR)
(74) Mandataire: Ramey, Daniel
(86) Numéro de dépôt international: PCT/FR2011/051752
(87) Numéro de publication internationale: WO 2012/013892

(56) Documents cités:
- FR-A1- 2 619 158
- JP-A- 7 305 602
- US-A1- 2005 186 074
- US-A1- 2006 110 255

## Description

La présente invention concerne une roue de compresseur ou de turbine pour une turbomachine telle qu'un turboréacteur ou un turbopropulseur d'avion, comprenant des moyens d'étanchéité inter-aubes.

Une roue de compresseur ou de turbine de turbomachine comprend un disque comportant à sa périphérie des rainures d'emmanchement de pieds d'aubes, ces pieds étant reliés aux pales des aubes par des plates-formes qui ont une forme générale parallélépipédique et sont, en position de montage sur le disque, séparées les unes des autres par de faibles jeux en direction circonférentielle.

Une partie du débit d'air de ventilation des aubes pénètre dans les espaces situés entre les pieds des aubes et doit être empêchée de passer à travers les jeux précités entre les plates-formes des aubes, radialement de l'intérieur vers l'extérieur, au moyen de systèmes d'étanchéité inter-aubes montés entre les plates-formes ou les pieds des aubes.

Dans la technique actuelle, chaque système d'étanchéité inter-aubes comprend un caisson en tôle qui est emprisonné radialement à l'intérieur des plates-formes de deux aubes adjacentes, entre les échasses de ces aubes.

L'inconvénient majeur de ce système d'étanchéité est qu'il ne permet pas de refroidir les plates-formes des aubes (sur lesquelles peuvent apparaître des criques), et ne sert donc qu'à assurer une étanchéité inter-aubes et éventuellement à amortir les vibrations auxquelles les aubes sont soumises en fonctionnement. De plus, ce système n'autorise pas le montage des aubes sur le disque et leur démontage du disque, indépendamment les unes des autres.

On a déjà proposé de monter un insert à section triangulaire entre les bords latéraux des plates-formes de deux aubes adjacentes.

Cependant, cette solution n'est pas entièrement satisfaisante car cet insert peut s'user en fonctionnement et son usure n'est pas homogène car il comporte différentes faces d'appui (au nombre de 3) susceptibles de s'user. De plus, cette usure n'est pas quantifiable lors d'une opération de maintenance par exemple. L'état de l'art antérieur est connu de JP 7305602.

L'invention a notamment pour but d'apporter une solution simple, efficace et économique à ce problème.

Elle propose à cet effet une roue de turbine ou de compresseur de turbomachine, comprenant des moyens d'étanchéité inter-aubes, ces moyens comprenant des inserts destinés à être engagés chacun dans une cavité longitudinale d'un bord latéral d'une plate-forme d'une aube et à venir en appui en fonctionnement sur le bord latéral en regard d'une plate-forme d'une aube adjacente, chaque insert ayant une forme allongée cylindrique et comprenant sur sa surface cylindrique externe au moins une gorge annulaire de passage d'air de refroidissement des plates-formes des aubes, caractérisée en ce que l'insert comprend sur sa surface cylindrique externe au moins une rainure annulaire formant témoin d'usure et dont la profondeur est inférieure à celle de la ou de chaque gorge annulaire de passage d'air de refroidissement.

L'insert selon l'invention a une unique surface d'appui susceptible de s'user par frottement, qui est sa surface cylindrique externe. L'insert peut adopter en fonctionnement n'importe quelle position autour de son axe longitudinal, ce qui favorise une répartition homogène de son usure sur toute sa surface cylindrique.

L'insert selon l'invention est plus stable qu'un insert à section triangulaire de la technique antérieure qui doit se positionner angulairement en fonctionnement, ce qui limite son usure par frottement. De plus, il est plus facile et plus économique à réaliser et sa ou ses gorges de refroidissement peuvent être simplement réalisées par usinage. Par ailleurs, cet insert autorise le démontage individuel des aubes, ce qui n'était pas le cas avec les caissons de la technique antérieure.

L'insert comprend une ou des gorges annulaires de passage d'air de refroidissement formées sur sa surface cylindrique externe. En fonctionnement, il est soumis à des forces centrifuges et vient en appui sur la paroi radialement externe de la cavité et sur le bord de la plate-forme de l'aube adjacente. Un débit calibré d'air de refroidissement peut passer entre les plates-formes et l'insert, à travers la ou les gorges de l'insert, pour venir refroidir localement les bords des plates-formes. La position et les dimensions de la ou chaque gorge de l'insert permettent de contrôler précisément le refroidissement des plates-formes.

L'insert peut par exemple comprendre une, deux ou trois gorges annulaires de passage d'air de refroidissement des plates-formes.

L'insert selon l'invention comprend en outre un ou des témoins d'usure, qui sont chacun formés par une rainure annulaire de la surface cylindrique externe de l'insert. Ces témoins d'usure permettent à un opérateur de déterminer, lors d'une opération de maintenance, si l'insert est trop usé et doit donc être changé.

La profondeur de la ou chaque rainure formant témoin d'usure est déterminée en fonction du niveau d'usure admissible pour l'insert, c'est-à-dire du niveau d'usure à partir duquel il n'assure plus une bonne étanchéité entre les plates-formes des aubes. Ainsi, un opérateur qui constate que les témoins d'usure ne sont plus visibles lors d'une opération de maintenance doit remplacer l'insert. Les témoins d'usure de l'insert facilitent donc sa maintenance.

L'insert peut comprendre une rainure annulaire formant témoin d'usure au voisinage de chacune de ses extrémités.

Selon une autre caractéristique de l'invention, la ou chaque rainure annulaire formant témoin d'usure a une profondeur inférieure à celle de la ou chaque gorge annulaire de passage d'air de refroidissement.

Dans un exemple particulier de réalisation de l'invention, l'insert a un diamètre de 2 à 3 mm environ et une longueur de 20 à 40 mm environ. La ou chaque gorge peut avoir une largeur de 0,5 mm environ et une profondeur de 0,6 mm environ, et la ou chaque rainure peut avoir une largeur de 0,2 mm environ et une profondeur de 0,2 mm environ.

L'insert selon l'invention peut être réalisé en alliage métallique tel qu'en Inconel®, ou en matériau composite à matrice céramique, par exemple.

La roue de turbine ou de compresseur selon l'invention comprend un disque portant des aubes, chaque aube comportant un pied emmanché dans une rainure de forme complémentaire de la périphérie du disque, et une plate-forme qui relie le pied à la pale de l'aube et comporte deux bord latéraux sensiblement parallèles, et est caractérisée en ce que le bord latéral de la plate-forme s'étendant du côté de l'intrados de la pale de chaque aube comporte une cavité longitudinale de logement d'un insert précité.

De préférence, la cavité de logement du système d'étanchéité a, au niveau de ses extrémités longitudinales, une section en forme de U ou V dont l'ouverture est orientée du côté de l'aube adjacente, la paroi latérale radialement interne de cette cavité s'étendant sensiblement parallèlement à la plate-forme et sa paroi latérale radialement externe étant inclinée par rapport à la plate-forme et s'étendant radialement vers l'extérieur du côté de l'aube adjacente.

L'invention sera mieux comprise et d'autres détails, caractéristiques et avantages de la présente invention apparaîtront plus clairement à la lecture de la description qui suit faite à titre d'exemple non limitatif et en référence aux dessins annexés, dans lesquels :
- la figure 1 est une vue schématique partielle de dessus d'une roue d'un compresseur ou d'une turbine de turbomachine, et représente deux aubes adjacentes de cette roue ;
- la figure 2 est une vue schématique en coupe selon la ligne II-II de la figure 1 ;
- la figure 3 est une vue schématique en perspective des aubes de la figure 1 ;
- la figure 4 est une vue à plus grande échelle d'une partie de la figure 2 ; et
- la figure 5 est une vue schématique en perspective de l'insert selon l'invention.

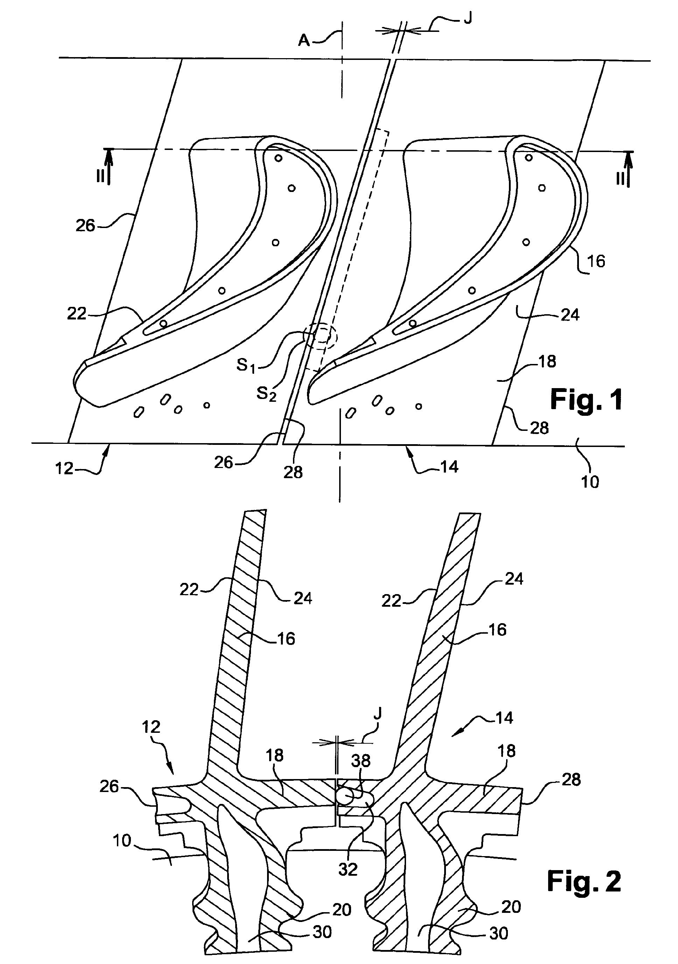

On se réfère d'abord aux figures 1 à 3 qui représentent très schématiquement et partiellement une roue de compresseur ou de turbine de turbomachine telle qu'un turboréacteur ou un turbopropulseur d'avion, cette roue comprenant un disque 10 portant à sa périphérie des aubes 12, 14, dont deux seulement sont représentées dans les dessins.

Chaque aube 12, 14 comprend une pale 16 reliée par une plate-forme 18 à un pied 20, qui a en section une forme en sapin dans l'exemple représenté. Le pied 20 de chaque aube est emmanché dans une rainure (non représentée) de forme complémentaire de la périphérie du disque 10.

La pale 16 de chaque aube comporte un intrados 22 et un extrados 24 reliés à l'amont par un bord d'attaque et à l'aval par un bord de fuite des gaz passant dans le compresseur ou la turbine.

La plate-forme 18 de chaque aube a une forme générale parallélépipédique et comprend des bords latéraux 26, 28 droits, qui sont parallèles et inclinés par rapport à l'axe longitudinal A de la roue. Lorsque ces bords latéraux sont parallèles aux axes longitudinaux des rainures précitées du disque, les aubes peuvent être montées sur la roue et démontées de la roue les unes indépendamment des autres.

En position de montage représentée aux figures 1 à 3, le bord latéral 26 de la plate-forme 18 d'une aube 14 est en regard du bord latéral 28 de la plate-forme 18 d'une aube 12 adjacente et est écarté de ce bord par un faible jeu J en direction circonférentielle, qui est de l'ordre de quelques dixièmes de millimètres.

Les pieds 20 des aubes comportent des canaux internes 30 (figure 2) de passage d'air de refroidissement qui alimentent des moyens de refroidissement des pales. Certains de ces canaux débouchent sur les côtés des pieds, radialement à l'intérieur des plates-formes 18 des aubes, pour l'alimentation en air de refroidissement des espaces inter-aubes situées radialement à l'intérieur des plates-formes.

Pour éviter le passage de cet air à travers le jeu J précité, il est connu de monter un système d'étanchéité entre les plates-formes 18 de deux aubes 12, 14 adjacentes.

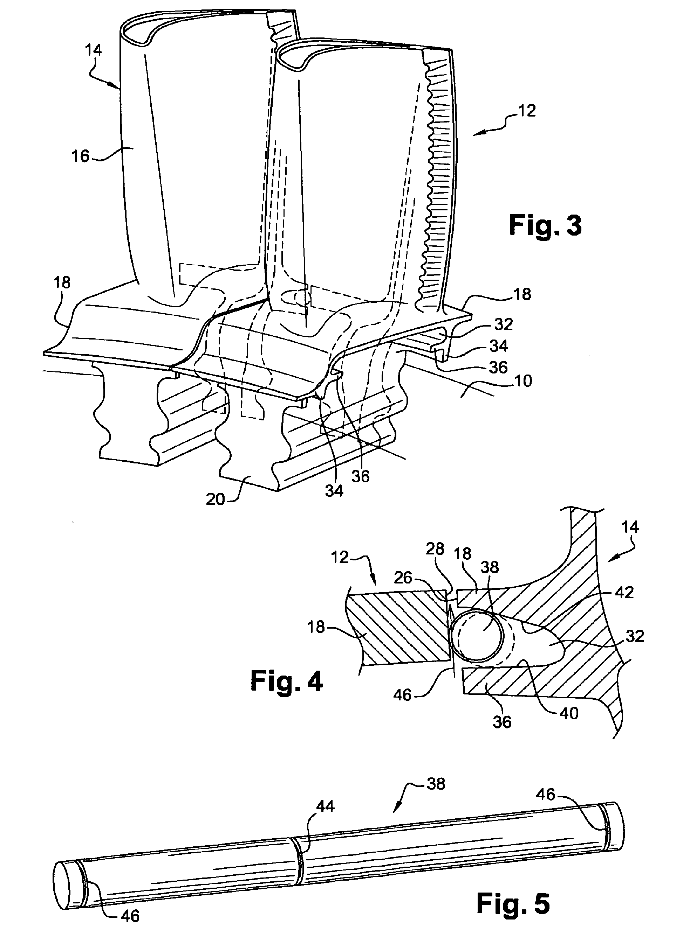

La présente invention propose un système d'étanchéité, représenté en figure 5, qui comprend des inserts 38 de forme allongée cylindrique, qui sont destinés chacun à prendre appui en fonctionnement sur des surfaces des bords latéraux 26, 28 des plates-formes 18 de deux aubes 12, 14 consécutives, et qui comprennent des moyens de refroidissement contrôlé et localisé des plates-formes ainsi que des témoins d'usure.

La position d'un insert cylindrique 38 est schématiquement représentée en figure 1. Le bord latéral 26 de la plate-forme 18 qui s'étend du côté de l'intrados 22 de la pale 16 de l'aube 14 comporte une cavité longitudinale 32 de logement de l'insert.

Comme cela est visible en figure 3, cette cavité 32 est délimitée radialement à l'extérieur par la plate-forme 18 de l'aube, à l'amont et à l'aval par des nervures 34 transversales de renfort s'étendant perpendiculairement à la plate-forme et au pied de l'aube, et radialement à l'intérieur par des rebords 36 s'étendant depuis ces nervures 34 vers la nervure opposée, dans une direction parallèle à la plate-forme.

Ces rebords 36 s'étendent seulement le long de parties d'extrémité de l'insert 38, qui n'est donc supporté que par l'intermédiaire de ses parties d'extrémité, à l'arrêt de la turbomachine.

La cavité 32 de logement de l'insert a, au niveau de ses extrémités longitudinales, une section sensiblement en forme de U ou V dont l'ouverture est orientée du côté de l'aube adjacente (figure 4).

La surface radialement externe 40 du rebord 36 précité définit la surface latérale radialement interne de la cavité 32, et une surface radialement interne 42 de la plate-forme 18 définit la surface latérale radialement externe de la cavité 32. Cette surface latérale 42 est inclinée radialement vers l'extérieur du côté de l'aube adjacente (figure 4).

La hauteur (ou dimension radiale) et la profondeur (ou dimension circonférentielle) de la cavité 32 sont supérieures au diamètre de l'insert 38 de façon à ce que celui-ci soit complètement engagé dans la cavité 32 en position de repos, comme cela est schématiquement représenté en traits pointillés en figure 4, et ne gêne donc pas le montage des aubes 12, 14 sur le disque 10.

Pendant le fonctionnement de la turbomachine, l'insert 38 est soumis à des forces centrifuges qui le sollicitent radialement vers l'extérieur. L'insert 38 glisse alors sur la surface latérale 42 inclinée de la cavité 32, et vient en appui sur le bord latéral 28 en regard de la plate-forme 18 de l'aube 12 adjacente, comme cela est représenté en traits continus en figure 4.

Dans cette position de fonctionnement, l'insert 38 est en appui sur des surfaces des bords latéraux 26, 28 des plates-formes 18 des aubes 12, 14 adjacentes, et assure une étanchéité entre ces plates-formes.

Selon une autre caractéristique de l'invention, l'insert 38 comprend sur sa surface cylindrique externe au moins une gorge annulaire externe 44 de passage d'air de refroidissement (figure 5). Lorsque l'insert est en appui en fonctionnement contre le bord 28 précité de la plate-forme de l'aube adjacente, de l'air de refroidissement peut passer depuis l'espace inter-aubes situé radialement à l'intérieur des plates-formes 18, jusqu'aux bords latéraux des plates-formes des aubes en vue de leur refroidissement (flèche 46 en figure 4).

La ou les gorges sont positionnées sur l'insert en fonction des zones à refroidir des bords latéraux 26, 28 des plates-formes 18.

Dans l'exemple représenté en figure 1, la gorge 44 est située au voisinage de l'extrémité aval de l'insert 18. L'air qui passe radialement de l'intérieur vers l'extérieur à travers cette gorge 44 permet de refroidir de 30° environ la température de la plate-forme 18 sur une zone circulaire S1 située au droit de la gorge de l'insert et dont la surface est sensiblement égale à la section de l'insert, et de 10° environ la température de la plate-forme sur une zone annulaire S2 s'étendant autour de la zone S1.

Dans l'exemple de la figure 5, l'insert 38 selon l'invention comprend également un témoin d'usure à chacune de ses extrémités, chaque témoin d'usure comprenant une rainure annulaire 46 formée sur la surface cylindrique externe de l'insert.

Comme expliqué dans ce qui précède, ces témoins d'usure permettent à un opérateur lors d'une opération de maintenance de déterminer si l'insert est trop usé et doit être changé. Les dimensions de cette rainure, et en particulier sa profondeur, sont donc déterminées en fonction du niveau d'usure admissible de l'insert.

L'insert peut être réalisé en alliage métallique (par exemple à base de nickel) ou en composite à matrice céramique.

Dans un exemple particulier de réalisation de l'invention, l'insert est du type de celui représenté en figure 5 et a une longueur de 31 mm environ et un diamètre de 2,6 mm environ. Il comporte une gorge annulaire de 0,5 mm environ de largeur et de 0,6 mm environ de profondeur, à une distance d'environ 17,5 mm d'une de ses extrémités. Il comporte une rainure annulaire formant témoin d'usure à environ 0,8 à 1 mm de chacune de ses extrémités, chaque rainure ayant une largeur de 0,2 mm environ et une profondeur de 0,2 mm environ.

## Revendications

1. Roue de turbine ou de compresseur de turbomachine, comprenant des moyens d'étanchéité inter-aubes, ces moyens comprenant des inserts (38) engagés dans des cavités longitudinales (32) des bords latéraux (26) des plates-formes (18) des aubes (14) et venant en appui en fonctionnement sur les bords latéraux (28) en regard des plates-formes des aubes (12) adjacentes, chaque insert ayant une forme allongée cylindrique et comprenant sur sa surface cylindrique externe au moins une gorge annulaire (44) de passage d'air de refroidissement des plates-formes des aubes (12, 14), **caractérisée en ce que** l'insert comprend sur sa surface cylindrique externe au moins une rainure annulaire (46) formant témoin d'usure et dont la profondeur est inférieure à celle de la ou de chaque gorge annulaire de passage d'air de refroidissement.

2. Roue selon la revendication 1, **caractérisée en ce que** l'insert (38) comprend une rainure annulaire (46) formant témoin d'usure, au voisinage de chacune de ses extrémités.

3. Roue selon la revendication 1 ou 2, **caractérisée en ce que** l'insert (38) comprend une, deux ou trois gorges annulaires (44) de passage d'air de refroidissement des plates-formes

4. Roue selon l'une des revendications précédentes, **caractérisée en ce que** l'insert (38) a un diamètre de 2 à 3 mm environ et une longueur de 20 à 40 mm environ.

5. Roue selon la revendication 4, **caractérisée en ce que** la ou chaque gorge annulaire (44) de passage d'air de refroidissement des plates-formes a une largeur de 0,5 mm environ et une profondeur de 0,6 mm environ.

6. Roue selon la revendication 4 ou 5, **caractérisée en ce que** la ou chaque rainure annulaire (46) formant témoin d'usure a une largeur de 0,2 mm environ et une profondeur de 0,2 mm environ.

7. Roue selon l'une des revendications précédentes, **caractérisée en ce que** l'insert (38) est réalisé en alliage métallique, tel qu'en Inconel®, ou en matériau composite à matrice céramique.

8. Roue selon l'une des revendications précédentes, comprenant un disque (10) portant des aubes (12, 14), chaque aube comportant un pied (20) emmanché dans une rainure de forme complémentaire de la périphérie du disque, et une plate-forme (18) qui relie le pied à la pale (16) de l'aube et comporte deux bord latéraux (26, 28) sensiblement parallèles, **caractérisée en ce que** le bord latéral de la plate-forme s'étendant du côté de l'intrados (22) de la pale de chaque aube comporte une cavité longitudinale (32) de logement d'un insert (38) précité.

9. Roue selon la revendication 8, **caractérisée en ce que** la cavité (32) de logement du système d'étanchéité a, au niveau de ses extrémités longitudinales, une section en forme de U ou V dont l'ouverture est orientée du côté de l'aube (12) adjacente, la paroi latérale radialement interne (40) de cette cavité s'étendant sensiblement parallèlement à la plate-forme et sa paroi latérale radialement externe (42) étant inclinée par rapport à la plate-forme et s'étendant radialement vers l'extérieur du côté de l'aube adjacente.

## Patentansprüche

1. Turbinen- oder Verdichterrad einer Strömungsmaschine bzw. eines Turbotriebwerks, enthaltend Mittel zum Abdichten zwischen den Schaufeln, wobei diese Mittel Einsätze (38) enthalten, die in längliche Hohlräume (32) der Seitenränder (26) der Plattformen (18) der Schaufeln (14) eingreifen, und im Betrieb in Anlage an die Seitenränder (28) gegenüber den Plattformen der angrenzenden Schaufeln (12) gelangen, wobei jeder Einsatz eine langgestreckte, zylindrische Form hat und an seiner Zylinderaußenfläche zumindest eine ringförmige Nut (44) für den Durchtritt von Kühlluft der Plattformen der Schaufeln (12, 14) aufweist, **dadurch gekennzeichnet, dass** der Einsatz an seiner Zylinderaußenfläche zumindest eine ringförmige Rille (46) aufweist, die eine Abnutzungsanzeige darstellt und deren Tiefe geringer ist als die der bzw. jeder ringförmigen Nut zum Durchtritt von Kühlluft.

2. Rad nach Anspruch 1, **dadurch gekennzeichnet, dass** der Einsatz (38) benachbart zu jedem seiner Enden eine ringförmige Rille (46) aufweist, die eine Abnutzungsanzeige darstellt.

3. Rad nach Anspruch 1 oder 2, **dadurch gekennzeichnet, dass** der Einsatz (38) eine, zwei oder drei ringförmige Nuten (44) zum Durchtritt von Kühlluft der Plattformen aufweist.

4. Rad nach einem der vorangehenden Ansprüche, **dadurch gekennzeichnet, dass** der Einsatz (38) einen Durchmesser von etwa 2 bis 3 mm und eine Länge von etwa 20 bis 40 mm hat.

5. Rad nach Anspruch 4, **dadurch gekennzeichnet, dass** die bzw. jede ringförmige Nut (44) zum Durchtritt von Kühlluft der Plattformen eine Breite von etwa 0,5 mm und eine Tiefe von etwa 0,6 mm hat.

6. Rad nach Anspruch 4 oder 5, **dadurch gekennzeichnet, dass** die bzw. jede ringförmige Rille (46), die eine Abnutzungsanzeige darstellt, eine Breite von etwa 0,2 mm und eine Tiefe von etwa 0,2 mm hat.

7. Rad nach einem der vorangehenden Ansprüche, **dadurch gekennzeichnet, dass** der Einsatz (38) aus Metalllegierung, wie etwa Inconel®, oder einem Verbundmaterial mit Keramikmatrix hergestellt ist.

8. Rad nach einem der vorangehenden Ansprüche, enthaltend eine Scheibe (10), die Schaufeln (12, 14) trägt, wobei jede Schaufel einen Fuß (20) aufweist, der in eine Rille mit komplementärer Form am Umfang der Scheibe eingeschoben ist, sowie eine Plattform (18), die den Fuß mit dem Blatt (16) der Schaufel verbindet und zwei im Wesentlichen parallel verlaufende Seitenränder (26, 28) aufweist, **dadurch gekennzeichnet, dass** der Seitenrand der Plattform, der sich auf der Druckseite (22) des Schaufelblatts einer jeden Schaufel erstreckt, einen länglichen Hohlraum (32) zum Aufnehmen eines vorgenannten Einsatzes (38) aufweist.

9. Rad nach Anspruch 8, **dadurch gekennzeichnet, dass** der Hohlraum (32) zum Aufnehmen des Abdichtungssystems im Bereich seiner Längsenden einen U- oder V-förmigen Querschnitt hat, dessen Öffnung zur Seite der angrenzenden Schaufel (12) ausgerichtet ist, wobei die radial innere Seitenwand (40) dieses Hohlraums sich im Wesentlichen parallel zur Plattform erstreckt und seine radial äußere Seitenwand (42) bezüglich der Plattform geneigt verläuft und sich radial nach außen auf der Seite der angrenzenden Schaufel erstreckt.

## Claims

1. A turbine or compressor wheel for a turbine engine, the wheel including inter-blade sealing means, which means comprise inserts (38) engaged in longitudinal cavities (32) in the side edges (26) of the platforms (18) of the blades (14) and bearing in operation against the facing side edges (28) of the platforms of the adjacent blades (12), each insert being in the form of an elongate cylinder and having at least one annular groove (44) in its outer cylindrical surface for passing air for cooling the platforms of the blades (12, 14), the wheel being **characterized in that** the insert includes at least one annular score (46) in its outer cylindrical surface forming a wear indicator and of depth that is less than the depth of the or each annular groove for passing cooling air.

2. A wheel according to claim 1, **characterized in that** the insert (38) has an annular score (46) forming a wear indicator in the vicinity of each of its ends.

3. A wheel according to claim 1 or claim 2, **characterized in that** the insert (38) has one, two, or three annular grooves (44) for passing platform cooling air.

4. A wheel according to any preceding claim, **characterized in that** the insert (38) has a diameter of about 2 mm to 3 mm and a length of about 20 mm to 40 mm.

5. A wheel according to claim 4, **characterized in that** the or each annular groove (44) for passing platform cooling air has a width of about 0.5 mm and a depth of about 0.6 mm.

6. A wheel according to claim 4 or claim 5, **characterized in that** the or each annular score (46) forming a wear indicator has a width of about 0.2 mm and a depth of about 0.2 mm.

7. A wheel according to any preceding claim, **characterized in that** the insert (38) is made of a metal alloy, such as of Inconel@, or out of a ceramic matrix composite material.

8. A wheel according to any preceding claim, comprising a disk (10) carrying blades (12, 14), each blade having a root (20) engaged in a slot of complementary shape in the periphery of the disk, and a platform (18) that connects the root to the airfoil (16) of the blade and that includes two substantially parallel side edges (26, 28), the wheel being **characterized in that** the side edge of the platform extending beside the pressure side (22) of the airfoil of each blade includes a longitudinal cavity (32) for receiving an above-mentioned insert (38).

9. A wheel according to claim 8, **characterized in that** the cavity (32) for receiving the sealing system has a U-shaped or V-shaped section at its longitudinal ends, the open side of the U- or V-shaped section facing towards the adjacent blade (12), the radially inner side wall (40) of said cavity extending substantially parallel to the platform and its radially outer side wall (42) being inclined relative to the platform and extending radially outwards beside the adjacent blade.
